# EUROPEAN PATENT APPLICATION

(11) **EP 3 786 360 A1**
(43) Date of publication of application: **03.03.2021**
(21) Application number: 19194613.6
(22) Date of filing: 30.08.2019
(51) Int. Cl.: E01C 9/00, C04B 26/16, C04B 111/00, C08G 18/10, C09D 175/02, C09D 175/04, C08G 18/79, C08G 18/42, C08G 18/38, C08G 18/36, C08G 18/32, C08G 18/50, B64F 1/02

(54) **ENERGY ABSORBING SYSTEM AND METHOD FOR PRODUCING SAME**

(71) Applicant: Runway Safe IPR AB, 400 16 Göteborg (SE)
(72) Inventor: TOMZ, Hubert Klaus, 9500 Villach (AT); Primeaux II Dudley Joseph, Elgin TX Texas 78621 (US)
(74) Representative: AWA Sweden AB

(57) **Abstract**

An energy absorbing system for arresting a vehicle (1) comprising a concrete subbase (2) positioned on a frangible support (3) and being covered with at least one polyurethane layer (4) and at least one polyurea layer (5) and a method for producing the same.

## Description

### TECHNICAL FIELD

The present invention relates to the field of vehicle arrestor systems and methods for their construction.

### BACKGROUND ART

End of runway aircraft arresting systems are becoming more popular for trapping aircraft when overshooting runways due to speed or weather conditions. To minimize or even avoid the severity of consequences to people and aircrafts in such events at the end of runways a bed of engineered materials can be built. Such engineered materials are usually high energy absorbing materials, which will crush under the weight of an aircraft. The aircraft is slowed by the loss of energy required to crush the engineered material. Current systems typically use cellular cement materials or lightweight aggregate foams made from recycled glass.

Regularly changing and harsh weather conditions (e.g. sun exposure in summer and freezing temperatures in winter, rain, hail etc.) affect present aircraft arresting systems to become ineffective over the time. Furthermore, light traffic as well as continuing jet blasts from planes taking off may lead to the destruction of currently known arresting systems. In particular, the surface of the current systems does not show sufficient resistance in regard to such environmental and aircraft-caused conditions.

It is an object of the present invention to provide an arrestor system for vehicles, which overcomes the drawbacks of the arrestor systems known in the art and which can be produced quickly in an environmental friendly manner and with limited costs.

### SUMMARY OF THE INVENTION

The present invention relates to an energy absorbing system for arresting a vehicle comprising a concrete subbase positioned on a frangible support and being covered with at least one polyurethane layer and at least one polyurea layer.

It turned surprisingly out that an energy absorbing system comprising the above structure shows superior arresting properties compared to other energy absorbing systems known in the art. In particular the use of polyurethane and polyurea layers in combination with a concrete base on a frangible support results in a superior energy absorbing system.

Another aspect of the present invention relates to a method for producing an energy absorbing system for arresting a vehicle comprising the steps of
a. applying concrete on a frangible support to form a concrete subbase,
b. applying at least one isocyanate and a first composition comprising at least one polyol and at least one catalyst to form a polyurethane layer on said concrete subbase, and
c. applying at least one isocyanate and a second composition comprising at least one polyamine to form a polyurea layer on said polyurethane layer.

In order to produce the aforementioned energy absorbing system for arresting vehicles layers of concrete, polyurethane and polyurea are applied on a frangible support. The frangible support is deposited on a terrain adjacent or at the end of runways or roads ad streets is a substantially planar manner.

A further aspect of the present invention relates to an air runway comprising at least one energy absorbing system for arresting a vehicle according to the present invention.

Another aspect of the present invention relates to a road or street comprising at least one energy absorbing system for arresting a vehicle according to the present invention.

### BRIEF DESCRIPTION OF THE FIGURES

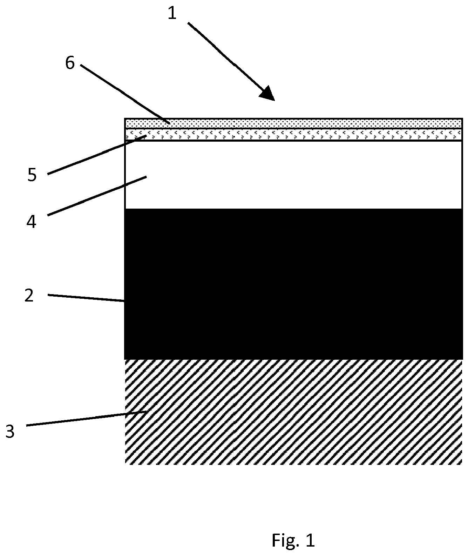

Fig. 1 shows an energy absorbing system for arresting a vehicle 1 according to the present invention. Said system comprises a concrete subbase 2 positioned on a frangible support 3. At least one polyurethane layer 4 covers said subbase 2 whereby a polyurea layer 5 and an anti-slip layer 6 further cover the polyurethane layer 4.

### DESCRIPTION OF EMBODIMENTS

The method of the present invention allows producing energy-absorbing systems for arresting vehicles of any kind. In a first step, concrete is applied on a frangible support to form a concrete subbase. The frangible support itself is usually produced on the terrain, preferably a substantially planar terrain, where the whole system shall be effective.

In a second step of the method of the present invention at least one polyurethane layer is applied on the concrete subbase. Thereby, at least one isocyanate as well as a first composition comprising at least one polyol and at least one catalyst are mixed directly before applying the mixture on the subbase or mixed directly on the concrete subbase by using a.

After the formation of the polyurethane layer in step b. at least one polyurea is formed on said polyurethane layer by applying isocyanate and a second composition comprising at least one polyamine.

The superior properties of the energy absorbing system of the present invention are a result of combining various layers comprising frangible material, concrete, polyurethane and polyurea.

The energy absorbing system of the present invention can be used for arresting vehicles of different types. "Vehicle", as used herein, refers to cars, trucks, aircrafts and the like. Hence, the system of the present invention can be used to arrest vehicles like cars, trucks and aircrafts.

"At least one isocyanate", "at least one polyol", "at least one polyamine" and "at least one catalyst", as used herein, means that one or more different types of isocyanates, polyols, polyamines and catalysts, respectively, can be used in the method of the present invention.

The at least one isocyanate and the various compositions can be applied on a surface by using a brush, a roller, a spray or any other appropriate application technique, whereby the application using a spray is most preferred. In addition, the application of concrete on the frangible support can be done by using a spray or any other known technique typically used for applying concrete on a surface.

According to a preferred embodiment of the present invention at least one isocyanate and a third composition comprising at least one polyol is applied on the concrete subbase after step a. and optionally on the polyurethane layer after step b., wherein the third composition is substantially water-free.

The at least one isocyanate and the third composition ("primer system") are designed to seal the surface of the concrete so as to eliminate any pinholing in the subsequent layers of the system, and keep water penetration from occurring. Furthermore, the aforementioned combination of the at least one isocyanate and the third composition can also be applied on the polyurethane layer resulting in a much more better binding between these layers.

According to another preferred embodiment of the present invention, at least one isocyanate and a fourth composition comprising at least one polyamine and at least one air release agent is applied on the polyurea layer to obtain an anti-slip layer.

The provision of a polyurea layer on top of the arresting system is advantageous in relation to color stability and the ability to incorporate fine aggregate for slip resistance.

According to a preferred embodiment of the present invention the concrete comprises limestone having a maximum compression strength of less than 200 N/mm², preferably less than 150 N/mm², more preferably less than 100 N/mm².

A maximum compression strength of less than 200 N/mm² is advantageous because it can break under the pressure caused by a vehicle like an aircraft, truck or bus.

According to a further preferred embodiment of the present invention the concrete comprises limestone having an average particle size of 0.01 to 20 mm, preferably 0.02 to 15 mm, more preferably 0.05 to 10 mm, more preferably from 0.1 to 8 mm.

The limestone present in the concrete subbase has preferably an average particle size of less than 20 mm. This size limitation is advantageous in regard to breakage of the subbase when pressure is applied.

According to a further preferred embodiment of the present invention the concrete is substantially free of quartz.

It turned surprisingly out that the use of concrete which is substantially free of quartz showed better results in regard to the breaking properties under pressure. Furthermore, quartz/sand may have negative environmental effects in regard to particle pollution and dust which can be harmful for breathing.

"Substantially free", as used herein, means that the concrete comprises less than 5 wt%, preferably less than 2 wt%, more preferably less than 1 wt%, quartz.

According to another further preferred embodiment of the present invention the concrete comprises cement. Cement is a common binder in concrete which is preferably used for producing the concrete subbase.

The concrete is applied on the support in a thickness of 10 to 400 mm, preferably 15 to 300 mm, more preferably 20 to 200 mm.

It turned out that the thickness of the concrete subbase shall be 400 mm or less to influence positively the breakage under pressure.

According to a further preferred embodiment of the present invention the frangible material comprises rocks with an average grain size of 1 to 10 cm, preferably 2 to 8 cm, more preferably 3 to 6, more preferably 4 to 5 cm.

The use of such frangible material is particularly advantageous because of its contribution to absorb the kinetic energy from the vehicles.

According to another preferred embodiment of the present invention the at least one polyol of the first composition is selected from the group consisting of polyester polyols, preferably polyetheylene terphthalate (PET) based polyols, more preferably recycled PET based polyols.

The polyester polyol is preferably selected from the group consisting of mannich based polyols, aliphatic amine based polyols, polyether-based polyols.

According to a preferred embodiment of the present invention the at least one catalyst of the first composition is selected from the group consisting of 1,3,5-Tris(dimethylaminopropyl)-1,3,5-hexahydrotriazine, N,N,N'-trimethyl-N'-hydroxyethyl-bisaminoethylether and potassium octoate.

According to a further preferred embodiment of the present invention the first composition comprises 60 to 95 wt%, preferably 70 to 90 wt%, of the at least one polyol, and 1 to 5 wt%, preferably 2 to 4 wt%, of the at least one catalyst.

According to another preferred embodiment of the present invention the first composition comprises 1 to 3 wt%, preferably 1.2 to 2 wt%, of a surfactant, preferably of a silicone surfactant.

Surfactants are preferably used to aid in the development of consistent closed cell structure in the first composition which is preferably applied or prepared as a foam.

The surfactant is preferably selected from the group consisting of silicone based surfactants and organic nonionic surfactants.

It is preferred to apply polyurethane in the form of a foam. Making a foam requires the formation of a gas at the same time as the urethane polymerization is occurring. The gas can be carbon dioxide, either generated by reacting isocyanate with water or added as a gas. According to the present invention the addition of water is preferred.

Hence, according to a preferred embodiment of the present invention the first composition comprises 1 to 5 wt%, preferably 1.2 to 3 wt%, more preferably 1.5 to 2 wt%, water.

According to another preferred embodiment of the present invention the first composition comprises 5 to 20 wt%, preferably 10 to 20 wt%, more preferably 11 to 15 wt%, of a fire retardant.

In order to render the energy absorbing system of the present invention heat resistant the first composition of the present invention may comprise fire retardants.

The fire retardant is preferably selected from the group consisting of tris(chloropropyl) phosphate, aluminium trihydrate, antimony oxide and sodium borate.

According to a further preferred embodiment of the present invention the at least one isocyanate and the first composition are combined during step b. in a ratio of 0.1:1 to 5:1, preferably 0.5:1 to 4:1, more preferably 0.8:1 to 2.5:1, more preferably 0.9:1 to 1.1:1.

According to another preferred embodiment of the present invention the at least one isocyanate and the first composition is applied on the concrete subbase to obtain a polyurethane layer in a thickness of 5 to 50 mm, preferably 15 to 40 mm, more preferably 20 to 30 mm.

It turned out that it is advantageous in regard to breakage that the polyurethane layer has a thickness within these limits.

The polyamine of the second composition is preferably selected from the group consisting of polyoxypropylenediamine, diethyltoluenediamine, methylenedianaline, polyoxypropylene triamine, substituted methylenedianaline and secondary methylenedianaline.

According to a preferred embodiment of the present invention the second composition comprises 60 to 100 wt%, preferably 65 to 95 wt%, more preferably 65 to 90 wt%, of the at least one polyamine.

According to another preferred embodiment of the present invention the second composition comprises 2 to 20 wt%, preferably 5 to 15 wt%, more preferably 5 to 10 wt%, of a fire retardant.

In order to make the upper layers of the energy absorbing system of the present invention fire resistant, the second composition comprises at least one fire retardant.

The fire retardant is selected from the group consisting of tris(chloropropyl) phosphate, aluminium trihydrate, antimony oxide and sodium borate.

According to a preferred embodiment of the present invention the at least one isocyanate and the second composition are combined during step c. in a ratio of 0.5:1.5 to 1.5:0.5, preferably 1:1.

According to another preferred embodiment of the present invention, the at least one isocyanate and the second composition are applied on the polyurethane layer to obtain a polyurea layer in a thickness of 0.1 to 10 mm, preferably 0.2 to 5 mm, more preferably 0.5 to 3 mm, more preferably 0.5 to 1 mm.

According to a preferred embodiment of the present invention the at least one polyol of the third composition is a hydroxyl group comprising triglyceride or fatty acid preferably selected from the group consisting of castor oil, ricolinoeic acid, cashew nut oil and soy based polyol.

The use of natural sources of fatty acids renders the method of the present invention much more environmental friendly compared to other methods known in the art, which use synthetic hydroxyl group donors.

According to another preferred embodiment of the present invention the at least one isocyanate and the at least one polyol of the third composition are applied on the concrete subbase and/or optionally on the polyurethane layer in a ratio of 0.5:1.5 to 1.5:0.5, preferably 1:1.

According to a preferred embodiment of the present invention the at least one polyamine of the fourth composition is selected from the group consisting of a polyaspartic ester, preferably based on methylene dicyclohexyl amines.

According to another preferred embodiment of the present invention the at least one air release agent of the fourth composition is selected from the group consisting of silicone based release agents, preferably methylated silica and/or dimethyl silicone polymers.

The fourth composition comprises preferably 80 wt% to 98 wt%, preferably 90 wt% to 98 wt%, more preferably 95 wt% to 98 wt%, of the at least one polyamine.

According to a preferred embodiment of the present invention the fourth composition comprises 2 wt% to 5 wt%, preferably 2 wt% to 4 wt%, of the at least one air release agent.

An air release agent is helpful to produce a polyurea foam. A preferred air-release agent used is water.

According to a preferred embodiment of the present invention the at least one isocyanate and the fourth composition are applied on the polyurea layer (4) in a ratio of 0.5:2 to 2:0.5, preferably 1:1.5.

The at least one isocyanate and the fourth composition are applied on the polyurea layer (4) in a thickness of 0.1 to 2 mm, preferably 0.25 to 1 mm.

According to a preferred embodiment of the present invention the at least one isocyanate is selected from the group of isocyanates consisting of aliphatic isocyanates selected from the group consisting of methylene diisocyanate, a bifunctional monomer of tetraalkyl xylene diisocyanate, cyclohexan diisocyanate, 1,12-dodecane diisocyanate, 1,4-tetramethylene diisocyanate, isophorone diisocyanate, and dicyclohexylmethane diisocyanate; aromatic isocyanates selected from the group consisting of m-phenylene diisocyanate, p-phenylene diisocyanate, polymethylene polyphenylisocyanate, 2,4-toluene diisocyanate, 2,6-toluene diisocyanate, dianisidine diisocyanate, bitolylene diisocyanate, naphthalene-1,4-diisocyanate, and diphenylene-4,4'-diisocyanate; and aliphatic/aromatic diisocyanates selected from the group consisting of xylylene-1,3-diisocyanate, bis(4-isocyanatophenyl)methane, bis(3-methyl-4-isocyanatophenyl)methane, and 4,4'-diphenylpropane diisocyanate;and mixtures thereof.

According to a preferred embodiment of the present invention the at least one isocyanate of step c. is an aromatic isocyanate.

Aromatic isocyanates turned out to be advantageous in forming a substantially rigid spray foam. Aliphatic isocyanates are too slow in reactivity to make a foam system for this purpose.

Another aspect of the present invention relates to an energy absorbing system for arresting a vehicle obtainable by a method according to the present invention.

A further aspect of the present invention relates to an energy absorbing system for arresting a vehicle comprising a concrete subbase 2 positioned on a frangible support 3 and being covered with at least one polyurethane layer 4 and at least one polyurea layer (5).

It turned surprisingly out that a system comprising the above layers on a frangible support shows superior energy absorbing properties than other energy absorbing systems known in the art. The interplay of polyurethane layers and polyurea layers on a frangible support turned out to be advantageous.

According to a preferred embodiment of the present invention the at least one polyurethane layer 4 is covered with at least one polyurea layer 5.

It is particular advantageous that at least one polyurethane layer of the energy absorbing system of the present invention is covered with at least one polyurea layer. In particular this order of the two layers turns in an energy absorbing system suitably used for heavy vehicles like aircrafts which shows resistance in regard to environmental influences, for instance.

According to a preferred embodiment of the present invention the concrete subbase and the layers covering said subbase are substantially jointless.

The method of the present invention allows to obtain an energy absorbing system for arresting a vehicle where the surface of the energy absorbing system is substantially jointless.

The polyurea layer 5 is preferably covered with an anti-slip layer comprising polyurea.

The energy absorbing system of the present invention can be used at the end of air runways or even roads. In order to enable people or light vehicles to move on such a system the at least one polyurea layer is preferably covered with an anti-slip layer which may also comprise polyurea.

A further aspect of the present invention relates to an air runway comprising at least one energy absorbing system for arresting a vehicle according to the present invention.

The runway comprises preferably two ends and the at least one energy absorbing system is positioned at the end of one or two ends of said air runway.

The energy absorbing system of the present invention can be part of runways at airports. Preferably, said energy absorbing system covers an area having a length of 20 to 500 meters and a width of 20 to 100 meters.

Another aspect of the present invention relates to a road comprising at least one energy absorbing system for arresting a vehicle according to the present invention.

The energy absorbing system of the present invention can also be installed on roads and streets to stop or decelerate vehicles. This may be helpful for trucks or buses having, for instance, broken breaks so that they can leave the streets or roads on an emergency exit where the energy absorbing system of the present invention is positioned. The energy absorbing system of the present invention can also be used to protect certain areas from a non-authorized vehicle.

The present invention is further illustrated by the following example, however, without being restricted thereto.

### EXAMPLE

The present example shows how the energy absorbing system of the present invention (see Fig. 1) was manufactured.

### Concrete Subbase 2

The concrete subbase 2 was applied at a thickness of 20 to 200 mm, with a desired thickness of 40 - 60 mm, on a frangible support 3.

### Primer System

The primer system was designed to seal the surface of the placed concrete subbase 2 so as to eliminate any pinholing in the subsequent layers of the system, and keep water penetration from occurring. However, the primer can also be used for coating the polyurethane layer This primer was composed of 100% solids (without water), and was based upon an aromatic polymeric isocyanate and a renewable resource polyol, i.e. castor oil. This has significant environmental advantages. While the primer is applied, it is designed to soak into the concrete and seal, and not provide a coating thickness layer.

The primer was installed at a spreading rate of 0.13 to 0.5 liters/m², with a desired spreading rate of 0.2 to 0.25 liters/m². The primer was applied by brush or roller, high pressure airless spray or plural component spray.

The primer was based upon an aromatic Isocyanate component, such as SUPRASEC 9584 from Huntsman Corporation. This is an isocyanate component having an isocyanate content of 24.1%, reactive functionality of 2.67, and an equivalent weight of 174, viscosity of 45 cps @ 25°C.

The resin component was Castor Oil #1, Ricinus Cumminus Seed Oil, with a hydroxyl value of 60 - 100, a viscosity of 200 - 600 cps @ 25°C.

The isocyanate and resin are mixed at a 1:1 by volume ratio, and applied to the substrate as noted above.

### Polyurethane layer 4:

The spray foam system was a specialty modified isocyanurate spray foam, being frangible and highly fire retardant, resistance to burning. This foam system was based upon a polymeric aromatic isocyanate and a resin blend of polyol, catalyst and water blown. This system did not use any additional organic blowing agents, and is environmentally friendly, using only water for expansion / blowing.

This spray foam system was processed at a ratio of 200:100 to 400:100 (isocyanate to Resin / polyol), with a desired processing ratio of 200:100 to 250:100. Application thickness of the foam can be from 15 to 40 mm, with a desired application thickness of 20 to 30 mm thickness.

The foam system can be applied to the primer system once the primer is tack free (usually within 1.5 hours). The foam system is applied using high pressure, heated variable ratio plural component equipment, fitted with an impingement mix spray gun.

This system was based upon the following formulation:

### Isocyanate Component:

| | |
|---|---|
| Polymeric MDI, | 100 parts by weight |
| such as RUBINATE M from Huntsman Corp | |

### Resin Blend:

| | |
|---|---|
| PET based polyol | 70 - 90 parts by weight |
| (Hydroxyl Number of 250) | |
| Water | 1.5 - 2.0 parts by weight |
| Trischloropropyl | 11 - 15 parts by weight |
| Phosphate (fire retardant) | |
| Silicone surfactant | 1.3 - 1.8 parts by weight |
| | |
| JEFFCAT TR 90 | 1.6 - 1.8 parts by weight |
| JEFFACT ZF 10 | 0.5 - 0.7 parts by weight |
| (Catalysts, both from Huntsman) | |
| | |
| POLYCAT 34 | 0.6 - 0.8 parts by weight |
| (catalyst from Evonik) | |
| Potassium Octoate | 0.4 - 0.8 parts by weight |
| (trimer formation catalyst) | |

This spray foam system was processed at a volume ratio of 200:100 to 400:100 (ISO to Resin / polyol), with a desired processing volume ratio of 200:100 to 250:100.

### Polyurea Layer 5:

The polyurea coating system is an aromatic based polyurea with properties designed to provide good elasticity and strength, even at low temperature exposure, such as freezing weather. This is a plural component system, based upon an aromatic prepolymer isocyanate and a resin blend composed of amine terminated resins. This is a 100% solids system, with very fast reactivity and cure.

Application of the polyurea system can be from 0.5 to 2.0 mm, with a desired application thickness of .5 to 1.0 mm. The system is applied using high pressure, heated plural component equipment, fitted with an impingement mix spray gun.

This system was based upon the following formulation:

### Isocyanate Component:

| | |
|---|---|
| SUPRASEC 2054 | 100 parts by weight |
| (from Huntsman Corp, 15 % isocyanate content, functionality of 2.0) | |

### Resin blend side:

| | |
|---|---|
| JEFFAMINE D-2000 | 50 - 70 parts by weight |
| (2000 molecular weight polyether amine from Huntsman Corp) | |
| LONZA DETDA | 17 - 20 parts by weight |
| (Lonza corp, diethyltoluene diamine) | |
| UNILINK 4200 | 5 - 10 parts by weight |
| (Dorf Ketal, secondary amine based on methylene dianaline) | |
| Aluminum Trihydrate | 5 - 10 parts by weight |
| (Fire retardant for Clariant) | |
| Pigment color | 2 - 5 parts by weight |
| | |
| Gel Time, secs | 5 - 10 |
| Tack free time, sec | ∼ 45 |

This system is processed at a 1:1 by volume ratio in the high pressure, high temperature proportioning spray equipment

### Anti-slip Coat:

A top coat can be applied over the polyurea system. This will provide color stability and the ability to incorporate fine aggregate for slip resistance. This was based upon an aliphatic polyurea system, using polyaspartic ester resins. Application thickness of the top coat was from 0.25 to 1 mm DFT, with a desired application thickness of 0.4 to 0.6 mm DFT. This can be applied by brush or roller, high pressure airless spray or plural component spray. The applied aggregate ranges from 0.2 - 0.5 mm, with 0.3 to 0.4 mm preferred.

This system was based upon the following formulation:

### Isocyanate component:

| | |
|---|---|
| HDI Trimer | 100 parts by weight |
| (such as DESMODUR 3900, N-100 or Tolonate HDT-LV) | |

### Resin blend component:

| | |
|---|---|
| DESMOPHEN NH-1420 | 55 - 65 parts by weight |
| DESMOPHEN NH-1520 | 35 - 40 parts by weight |
| (polyaspartic ester from Bayer) | |
| | |
| Silquest A-1100 | 0.5 - 1.0 parts by weight |
| (amino silane adhesion promoter from Momentive) | |
| | |
| BYK 354 | 1.7 - 2.2 parts by weight |
| (air release agent - Byk Chemie) | |
| | |
| Airex 900 | 1.4 - 1.7 parts by weight |
| (air release agent - Goldschmidt Chemical) | |
| | |
| Mix ratio, By volume | 1.0 ISO : 1.5 Resin |
| | |
| Gel Time, Minutes | 30 - 35 minutes |
| Tack free, hours | 1.0 - 1.5 hours |

## Claims

1. Method for producing an energy absorbing system (1) for arresting a vehicle comprising the steps of
a. applying concrete on a frangible support (3) to form a concrete subbase (2),
b. applying at least one isocyanate and a first composition comprising at least one polyol and at least one catalyst to form a polyurethane layer (4) on said concrete subbase (2), and
c. applying at least one isocyanate and a second composition comprising at least one polyamine to form a polyurea layer (5) on said polyurethane layer (4).

2. Method according to claim 1, wherein at least one isocyanate and a third composition comprising at least one polyol is applied on the concrete subbase (2) after step a. and optionally on the polyurethane layer (4) after step b., wherein the third composition is substantially water-free.

3. Method according to claim 1 or 2, wherein at least one isocyanate and a fourth composition comprising at least one polyamine and at least one air release agent is applied on the polyurea layer (5) to obtain an anti-slip layer (6).

4. Method according to any one of claims 1 to 3, wherein the concrete is substantially free of quartz.

5. Method according to any one of claims 1 to 4, wherein the at least one polyol of the first composition is selected from the group consisting of polyester polyols.

6. Method according to any one of claims 1 to 5, wherein the at least one catalyst of the first composition is selected from the group consisting of 1,3,5-Tris(dimethylaminopropyl)-1,3,5-hexahydrotriazine, N,N,N'-trimethyl-N'-hydroxyethyl-bisaminoethylether and potassium octoate.

7. Method according to any one of claims 1 to 6, wherein the first composition comprises 1 to 3 wt%, preferably 1.2 to 2 wt%, of a surfactant, preferably of a silicone surfactant.

8. Method according to any one of claims 1 to 7, wherein the first composition comprises 1 to 5 wt%, preferably 1.2 to 3 wt%, more preferably 1.5 to 2 wt%, water and/or 5 to 20 wt%, preferably 10 to 20 wt%, more preferably 11 to 15 wt%, of a fire retardant.

9. Method according to any one of claims 1 to 8, wherein the at least one isocyanate and the first composition is applied on the concrete subbase (2) to obtain a polyurethane layer (4) in a thickness of 5 to 50 mm, preferably 15 to 40 mm, more preferably 20 to 30 mm.

10. Method according to any one of claims 1 to 9, wherein the at least one isocyanate and the second composition are applied on the polyurethane layer (4) to obtain a polyurea layer (4) in a thickness of 0.1 to 10 mm, preferably 0.2 to 5 mm, more preferably 0.5 to 3 mm, more preferably 0.5 to 1 mm.

11. Method according to any one of claims 3 to 10, wherein the at least one air release agent of the fourth composition is selected from the group consisting of silicone based release agents, preferably methylated silica and/or dimethyl silicone polymers.

12. Method according to any one of claims 3 to 11, wherein the fourth composition comprises 80 wt% to 98 wt%, preferably 90 wt% to 98 wt%, more preferably 95 wt% to 98 wt%, of the at least one polyamine and/or 2 wt% to 5 wt%, preferably 2 wt% to 4 wt%, of the at least one air release agent.

13. Method according to any one of claims 3 to 12, wherein the at least one isocyanate and the fourth composition are applied on the polyurea layer (4) in a thickness of 0.1 to 2 mm, preferably 0.25 to 1 mm.

14. An energy absorbing system for arresting a vehicle (1) obtainable by a method according to any one of claims 1 to 13.

15. An energy absorbing system for arresting a vehicle (1) comprising a concrete subbase (2) positioned on a frangible support (3) and being covered with at least one polyurethane layer (4) and at least one polyurea layer (5).

16. Air runway or road comprising at least one energy absorbing system for arresting a vehicle (1) according to claim 14 or 15.
